Europäisches Patentamt

European Patent Office

Office européen des brevets

(11) Veröffentlichungsnummer: **0 204 145**

**A1**

# (12) EUROPÄISCHE PATENTANMELDUNG

(21) Anmeldenummer: **86105873.3**

(22) Anmeldetag: **29.04.86**

(51) Int. Cl.⁴: **F 16 L 13/02**
**B 23 K 9/02**

(30) Priorität: **10.05.85 DE 3516942**

(43) Veröffentlichungstag der Anmeldung:
**10.12.86 Patentblatt 86/50**

(84) Benannte Vertragsstaaten:
**AT BE CH DE FR GB IT LI NL SE**

(71) Anmelder: **KRAFTWERK UNION
AKTIENGESELLSCHAFT
Wiesenstrasse 35
D-4330 Mülheim (Ruhr)(DE)**

(72) Erfinder: **Engelhard, Gerhard, Dipl.-Ing.
Gleiwitzer Strasse 19
D-8520 Erlangen(DE)**

(72) Erfinder: **Lang, Christian
Bammersdorferstrasse 17
D-8550 Forchheim(DE)**

(72) Erfinder: **Zametzer, Georg
Dernbachstrasse 1
D-8550 Forchheim(DE)**

(74) Vertreter: **Mehl, Ernst, Dipl.-Ing. et al,
Postfach 22 01 76
D-8000 München 22(DE)**

(54) **Verbindungsteil zum Verschweissen von Rohren.**

(57) Die Erfindung betrifft ein Verbindungsteil zum Verschweißen von Rohren (2 und 3), das als vorgeformter Schweißdraht zwischen den Rohrenden anzuordnen und mit diesen zu verschweißen ist. Es ist vorgesehen, daß das Verbindungsteil eine Lochscheibe (1) ist, deren äußerer und innerer Durchmesser den entsprechenden Durchmessern der Rohre (2 und 3) angepaßt ist. Die Lochscheibe (1) kann an ihrer äußeren Mantelfläche mit einem Zentrierring (5) fest verbunden sein, der sich senkrecht zu den Stirnflächen der Lochscheibe (1) erstreckt und die Enden der Rohre (2 und 3) außen übergreift.

FIG 3

EP 0 204 145 A1

KRAFTWERK UNION AKTIENGESELLSCHAFT  Unser Zeichen **0204145**

-1-

VPA 85 P 8 5 1 3 **E**

Verbindungsteil zum Verschweißen von Rohren

Die Erfindung betrifft ein Verbindungsteil zum Verschweißen von Rohren, das als vorgeformter Schweißdraht zwischen den Rohrenden anzuordnen und mit diesen zu verschweißen ist.

Derartige vorgeformte Schweißdrähte sind bekannt. Diese haben eine vorgegebene Länge und sind bereits gebogen, so daß offene Ringe aus Schweißdraht vorhanden sind. Die Ringe werden zwischen zwei Rohrenden gelegt, die dann beispielsweise mit einer Schweißzange verschweißt werden.

Die bekannten offenen Schweißringe müssen zunächst den Rohrenden angepaßt werden. Daher ist eine Überlappungszone für die Ringenden vorgesehen, die je nach Rohrgröße verkleinert oder vergrößert wird. Im Bereich dieser Überlappungszone ist der Ring doppelt so dick wie sonst. Das überlappende Teilstück muß daher vor dem Verschweissen abgeschnitten werden.

Damit die Rohrenden zentriert verschweißt werden, muß bisher der Schweißer die beiden Rohrenden zentriert anordnen.

Der Erfindung liegt die Aufgabe zugrunde, ein Verbindungsteil zum Verschweißen von Rohrenden zu entwickeln, das leicht einsetzbar ist. Dabei soll das Verbindungs-

03.05.1985 Mnl 2 Ant

teil die Rohrenden vor dem Verschweißen sicher zentrieren. Hierdurch soll auf zusätzliche Geräte, wie Zentrierbügeln verzichtet werden.

Die Aufgabe wird erfindungsgemäß dadurch gelöst, daß das Verbindungsteil eine Lochscheibe ist, deren äußerer und innerer Durchmesser den entsprechenden Durchmessern der Rohre angepaßt ist.

Solche Verbindungsteile müssen nicht zugeschnitten werden und gewähren einen gleichmäßigen Schweißzusatz und damit eine gleichbleibende Nahtqualität und gute Reproduzierbarkeit der Schweißnähte. Die Abmessungen der Verbindungsteile sind erfindungsgemäß auf die Rohre abgestimmt. Ein Biegevorgang ist also nicht mehr nötig. Vielmehr sind die erfindungsgemäßen Verbindungsteile sofort einsatzbereit.

In manchen Anlagen, beispielsweise bei der Kleinleitungsmontage eines Kernkraftwerkes, sind sehr viele gleichartige Rohre miteinander zu verschweißen. Die Lochscheiben werden dazu wegen der erforderlichen hohen Stückzahl einfach und kostengünstig beispielsweise durch Ausstanzen aus Blechtafeln oder durch Abschneiden von Scheiben an handelsüblichen Rohren hergestellt.

Mit dem erfindungsgemäßen Verbindungsteil werden die Rohrenden kostengünstig und mit einfach handhabbaren Mitteln zuverlässig mit gleichbleibender Qualität verschweißt.

Darüber hinaus ermöglicht der Gegenstand der Erfindung, daß die Rohrenden noch vor dem Verschweißen an Stirnflächen des Verbindungsteiles zentriert ansetzbar sind. Dazu ist das Verbindungsteil beispielsweise an seiner äußeren Mantelfläche mit einem Zentrierring fest verbunden, der sich senkrecht zu den Stirnflächen des Verbindungsstückes erstreckt und die Rohrenden außen übergreift. Auf der Innenoberfläche des Zentrierringes sind z.B. Noppen vorhanden. In das so als Zentrierteil geformte Verbindungsteil werden die Rohrenden von beiden Seiten eingeschoben und dann zentriert verschweißt. Toleranzen der Rohrdurchmesser bleiben durch die Noppen wirkungslos, da die Rohrenden zwischen den Noppen fest eingespannt gehalten werden. Hiermit wird der Vorteil erzielt, daß die Rohre vor oder während des Schweißvorganges zentriert bleiben und nicht verrutschen können. Durch die erfindungsgemäßen Verbindungsteile kommt man also ohne zusätzliche Zentrierbügel aus.

Nach einem anderen Beispiel ist das radiale Profil der Lochscheibe ein Gegenstück zum Profil der Stirnflächen der Rohrenden. Hiermit wird ebenfalls der Vorteil erzielt, daß die Rohre durch das Verbindungsteil ohne Zentrierbügel zentriert gehalten werden.

Die Verbindungsteile sind aus einem Material gefertigt, das ein werkstoffgerechtes Verschweißen gewährleistet.

Mit der Erfindung wird insbesondere der Vorteil erzielt, daß mit geringem Arbeitsaufwand Rohre, die verschweißt werden sollen, gleichmäßig mit Schweißzusatz versehen und darüber hinaus während des Schweißvorganges zentriert gehalten werden. Die erfindungsgemäßen Verbin-

dungsteile ersetzen sowohl den Schweißdraht, der geformt werden muß, als auch die Zentrierbügel.

Die Erfindung soll anhand eines in der Zeichnung wiedergegebenen Ausführungsbeispieles erläutert werden:

Fig. 1    zeigt einen Längsschnitt durch die Rohre mit eingefügter Lochscheibe vor dem Verschweißen.

Fig. 2    zeigt in entsprechender Anordnung ein Zentrierteil mit Zentrierring.

Fig. 3    zeigt ein Zentrierteil mit Zentrierring in perspektivischer Darstellung.

Fig. 4
und
Fig. 5    zeigen Längsschnitte durch die Rohre mit Profillochscheiben, deren Profile mit den Stirnflächen der Rohrenden zusammenwirken.

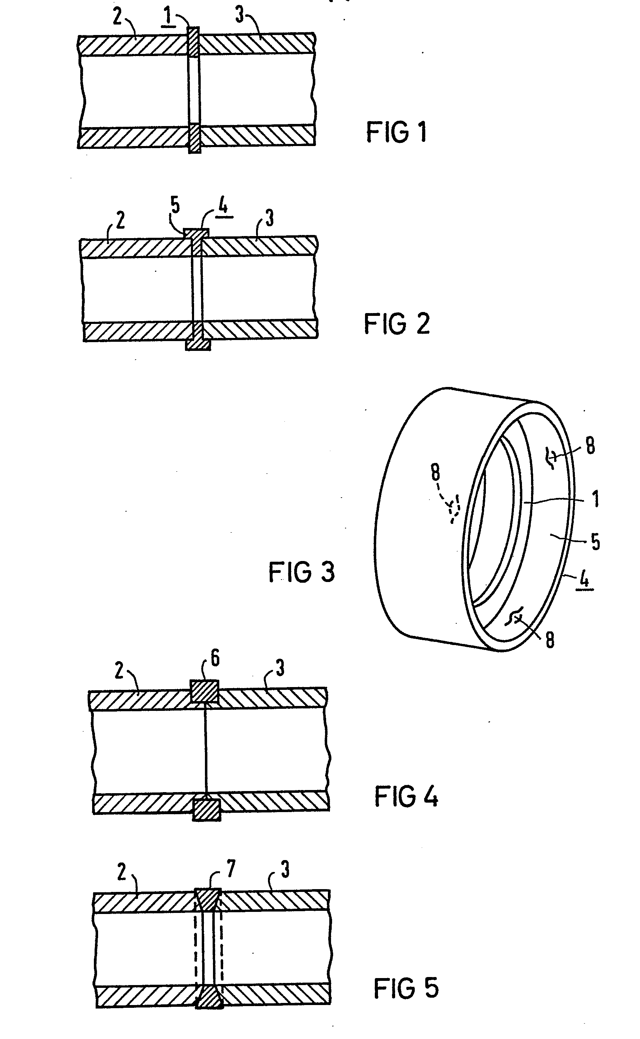

Ein Verbindungsteil nach Fig. 1 dient zum Verschweißen von zwei Rohren 2 und 3. Dieses Verbindungsteil hat die Form einer gleichmäßig dicken Lochscheibe 1 mit festem äußeren und festem inneren Durchmesser, die den entsprechenden Durchmessern der Rohre 2 und 3 angepaßt sind. Nach Fig. 1 ist das Verbindungsteil zwischen den Rohrenden angeordnet. Anschließend werden das Verbindungsteil und die Rohrenden beispielsweise mit einer Schweißzange verschweißt, wodurch eine saubere Schweißnaht gebildet wird.

Ein Zentrierteil 4 nach Fig. 2 ist eine Lochscheibe 1 nach Fig. 1, die an ihrer äußeren Mantelfläche mit einem Zentrierring 5 fest verbunden ist. Dieser Zentrierring 5 erstreckt sich senkrecht zu den Stirnflächen der Lochscheibe 1 und übergreift die Rohre 2 und 3 von außen. Durch den Zentrierring 5 werden die Rohre 2 und 3 vor dem Verschweißen zentriert zusammengehalten. Daher kann auf Zentrierbügel verzichtet werden, ohne daß die Rohre 2 und 3 vor oder während des Schweißvorganges seitlich verrutschen können.

Die Raumform eines derartigen Zentrierteiles 4 ist nach Fig. 3 durch die Lochscheibe 1 und den Zentrierring 5 gekennzeichnet. Die zu verschweißenden Rohrenden werden von gegenüberliegenden Seiten aus in den Zentrierring 5 bis zur Lochscheibe 1 hineingeschoben. Die Abmessungen des Zentrierteiles 4 sind den Rohrmaßen angepaßt. Auf der Innenoberfläche des Zentrierringes 5 können Noppen 8 angeordnet sein, die die Rohrenden halten. Durch Erhitzen des Zentrierteiles 4, beispielsweise mit einer Schweißzange, werden die Rohre 2 und 3 miteinander verschweißt.

Falls die Stirnflächen der zu verschweißenden Rohre 2 und 3 ein bestimmtes Profil aufweisen, können die Rohrenden auch ohne Zentrierring 5 nach Fig. 2 während des Schweißvorganges zentriert gehalten werden. Dazu genügen Profillochscheiben 6, 7, deren radiales Profil ein Gegenstück ist zu dem Profil, das an den Stirnflächen der Rohrenden vorgesehen ist. Beispielsweise ist nach Fig. 4 eine Profillochscheibe 6 mit rechteckigem Profil in ein stufenförmiges Profil an den Enden der Rohre 2

0204145

und 3 eingefügt. Nach Fig. 5 ist eine andere Profillochscheibe 7 mit trapezförmigem radialem Profil
zwischen Rohren 2 und 3 mit abgeschrägten Stirnflächen
angeordnet.

Die erfindungsgemäßen Verbindungsteile gewährleisten
einen gleichmäßigen Schweißzusatz und damit eine gleichbleibende gute Nahtqualität. Die Verbindungsteile nach
den Fig. 2 bis 5 dienen darüber hinaus als Zentrierhilfen für die Rohrenden und machen Zentrierbügel
überflüssig.

5 Patentansprüche
5 Figuren

Liste der Bezugszeichen

1 Lochscheibe

2 erstes Rohr

3 zweites Rohr

4 Zentrierteil

5 Zentrierring

6 Profillochscheibe

7 Profillochscheibe

8 Noppen

## Patentansprüche

1. Verbindungsteil zum Verschweißen von Rohren (2 u.3), das als vorgeformter Schweißdraht zwischen den Rohrenden anzuordnen und mit diesen zu verschweißen ist, d a - d u r c h  g e k e n n z e i c h n e t , daß das Verbindungsteil eine Lochscheibe (1) ist, deren äußerer und innerer Durchmesser den entsprechenden Durchmessern der Rohre (2 und 3) angepaßt ist.

2. Verbindungsteil nach Anspruch 1, d a d u r c h  g e - k e n n z e i c h n e t , daß die Lochscheibe (1) gleichmäßig dick ist.

3. Verbindungsteil nach Anspruch 1, d a d u r c h  g e - k e n n z e i c h n e t , daß die Lochscheibe (1) an ihrer äußeren Mantelfläche mit einem Zentrierring (5) fest verbunden ist, der sich senkrecht zu den Stirnflächen der Lochscheibe (1) erstreckt und die Enden der Rohre (2 und 3) außen übergreift, so daß an den Stirnflächen der Lochscheibe (1) die Rohre (2 und 3) zentriert ansetzbar sind.

4. Verbindungsteil nach Anspruch 3, d a d u r c h  g e - k e n n z e i c h n e t , daß am Zentrierring (5) auf der Innenoberfläche Noppen (8) vorhanden sind, zwischen denen die Rohrenden gehalten werden.

5. Verbindungsteil nach Anspruch 1, d a d u r c h  g e - k e n n z e i c h n e t , daß das Verbindungsteil eine Profillochscheibe (6, 7) ist mit einem radialen Profil, das ein Gegenstück zum Profil der Stirnflächen der Rohre (2 und 3) ist,so daß die Profillochscheibe (6, 7) mit den Rohrenden zusammenwirkt.

FIG 1

FIG 2

FIG 3

FIG 4

FIG 5

## Europäisches Patentamt

**EUROPÄISCHER RECHERCHENBERICHT**

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | EP-A-0 095 976 (CREUSOT-LOIRE) <br> * Figur 1; Patentanspruch 1 * | 1-2 | F 16 L 13/02 <br> B 23 K 9/02 |
| | --- | | |
| X | PATENTS ABSTRACTS OF JAPAN, Band 5, Nr. 155 (M-90) 827 , 30. September 1981; & JP - A - 56 83 632 (HITACHI SEISAKUSHO K.K.) 08.07.1981 | 1,3 | |
| | --- | | |
| X | CH-A- 202 034 (SULZER) <br> * Figur; Patentanspruch * | 1,5 | |
| | ----- | | |

**RECHERCHIERTE SACHGEBIETE (Int. Cl.4)**

F 16 L
B 23 K

Der vorliegende Recherchenbericht wurde für alle Patentansprüche erstellt.

| Recherchenort <br> DEN HAAG | Abschlußdatum der Recherche <br> 29-08-1986 | Prüfer <br> NARMINIO A. |
|---|---|---|

KATEGORIE DER GENANNTEN DOKUMENTE
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument
& : Mitglied der gleichen Patentfamilie, übereinstimmendes Dokument

EPA Form 1503 03 82